# EUROPEAN PATENT APPLICATION

(11) **EP 2 669 735 A1**
(43) Date of publication of application: **04.12.2013**
(21) Application number: 13168573.7
(22) Date of filing: 21.05.2013
(51) Int. Cl.: G02F 1/1343

(54) **Transparent, see through display device**

(30) Priority: 28.05.2012 TW 101118966
(71) Applicant: Acer Incorporated, New Taipei City 221 (TW)
(72) Inventor: Ko, Chueh-Pin, 221 New Taipei City (TW)
(74) Representative: Becker Kurig Straus

(57) **Abstract**

A transparent, see through display device is provided. The thickness of the transparent display device is reduced by using a transparent backlight unit as a backlight source of a transparent display panel, and transparency of the transparent display panel can be changed by adjusting gray scale levels of transparent areas on the transparent display panel.

## Description

### BACKGROUND OF THE INVENTION

### Field of the Invention

The invention relates to a transparent display device. More particularly, the invention relates to a transparent display device having a transparent backlight source.

### Description of Related Art

At present, the performance requirements of the market for liquid crystal displays (LCD) include high contrast ratio, no gray scale inversion, little color shift, high luminance, high color vividness, high color saturation, quick response, wide-viewing angle, and so forth.

The LCDs can normally be categorized into a transmissive LCD, a reflective LCD, and a transflective LCD. Since the application of displays is rather extensive, transparent displays have been gradually developed. The transparent display has a sufficient transparency rate, which enables a person to look through the display panel and observe the background behind the panel. Besides, the transparent display has a wide range of use in a variety of areas, e.g., the transparent display may be applied to windows of buildings or cars or may be used in showcase events. Since the transparent display not only can perform the inherent transparent display function but also may serve as an information display in the future, the transparent display has attracted great attention of the market. A user located at one side of the transparent display may see an object at the other side of the transparent display; therefore, the transparent display does not appear to be visually heavy, and the user does not feel that the transparent display occupies excessive space.

Nonetheless, based on the design of the existing transparent display, implementation of the backlight source requires a light box. Namely, light is diffused in the box and then scattered onto transparent pixels, such that the user is allowed to observe an image displayed on the transparent display. Such implementation will excessively increase the volume of the transparent display.

### SUMMARY OF THE INVENTION

The invention is directed to a transparent display device which may have reduced thickness.

In an embodiment of the invention, a transparent display device that includes a transparent display panel and a transparent backlight unit is provided. The transparent display panel adjusts distribution of a non-transparent area on the transparent display panel according to a display data signal. The transparent backlight unit is configured at one side of the transparent display panel. Besides, the transparent backlight unit emits light and acts as a backlight source to irradiate the transparent display panel, such that the transparent display panel displays an image.

According to an embodiment of the invention, the transparent display panel includes a plurality of pixel areas and a plurality of transparent areas. A gray scale level of each of the pixel areas is adjusted according to the display data signal, such that an image is displayed on the transparent display panel. The transparent areas determine transparency of the transparent display device.

According to an embodiment of the invention, transparency of each of the transparent areas is adjusted according to a transparency control signal, and the transparency control signal indicates gray scale levels of the transparent areas.

According to an embodiment of the invention, the transparent areas are periodically arranged on the transparent display panel.

According to an embodiment of the invention, each of the pixel areas includes a plurality of pixels, and each of the pixels includes at least one sub-pixel.

According to an embodiment of the invention, color of each of the at least one sub-pixel is one of red color, green color, blue color, and yellow color.

According to an embodiment of the invention, the transparent display device further includes a color filter layer configured on the transparent display panel. The color filter layer has a plurality of pixels corresponding to the pixel areas, and each of the pixels includes at least one sub-pixel.

According to an embodiment of the invention, each of the at least one sub-pixel is one of a red color filter layer, a green color filter layer, a blue color filter layer, and a yellow color filter layer.

According to an embodiment of the invention, the transparent backlight unit is an organic light-emitting diode (OLED) display panel.

According to an embodiment of the invention, the transparent backlight unit is a projection unit.

According to an embodiment of the invention, the projection unit projects color light to the transparent display panel through applying a color sequential method.

According to an embodiment of the invention, the transparent backlight unit further includes a reflective unit that reflects projection light of the projection unit and acts as the backlight source

According to an embodiment of the invention, the transparent backlight unit includes a light guide plate (LGP), a light source, and a plurality of scattering particles. The LGP has a light-incident side surface, a first surface, and a second surface opposite to the first surface, and the second surface is located between the transparent display panel and the first surface. The light source is configured adjacent to the light-incident side surface of the LGP.
The scattering particles are configured on the first surface. Besides, the scattering particles reflect light emitted from the light source and act as the backlight source.

According to an embodiment of the invention, arrangement of the sub-pixels is in a stripe shape, in a mosaic shape, or in a triangle shape.

Based on the above, the transparent backlight unit serves as the backlight source of the transparent display panel according to an embodiment of the invention. Due to the transparency property of the transparent backlight unit, no light box is required for providing the backlight source, and thereby the transparent display device may have the reduced thickness.

In order to make the aforementioned and other features and advantages of the invention more comprehensible, embodiments accompanying figures are described in detail below.

### BRIEF DESCRIPTION OF THE DRAWINGS

The accompanying drawings constituting a part of this specification are incorporated herein to provide a further understanding of the invention. Here, the drawings illustrate embodiments of the invention and, together with the description, serve to explain the principles of the invention.

FIG. 1 is a schematic diagram illustrating a transparent display device according to an embodiment of the invention.

FIG. 2A to FIG. 2E are schematic diagrams illustrating distribution of pixel areas and transparent areas on a transparent display panel according to an embodiment of the invention.

FIG. 3A to FIG. 3D are schematic diagrams illustrating pixel arrangement according to an embodiment of the invention.

FIG. 4A and FIG. 4B are schematic diagrams illustrating a transparent display device according to an embodiment of the invention.

FIG. 5 is a schematic diagram illustrating a transparent display device according to another embodiment of the invention.

### DESCRIPTION OF EMBODIMENTS

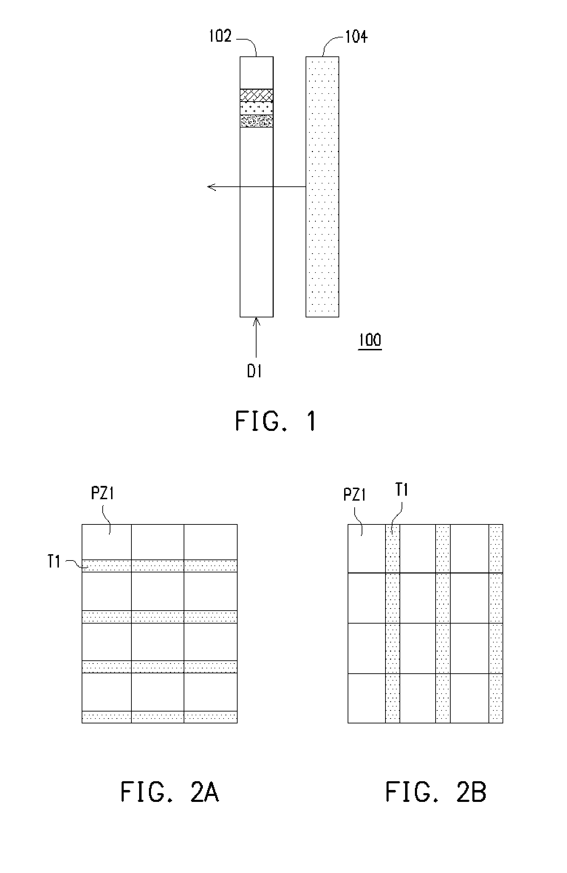

FIG. 1 is a schematic diagram illustrating a transparent display device according to an embodiment of the invention. With reference to FIG. 1, the transparent display device 100 includes a transparent display panel 102 and a transparent backlight unit 104. The transparent display panel 102 may be a liquid crystal display (LCD) panel, e.g., a twisted nematic (TN) LCD panel, a vertical alignment (VA) LCD panel, an in-phase switching (IPS) LCD panel, an optically compensated bend (OCB) LCD panel, or a blue phase LCD panel. The transparent backlight unit 104 is an OELD display panel in the present embodiment, which should not be construed as a limitation to the invention. The transparent display panel 102 adjusts distribution of a non-transparent area on the transparent display panel 102 according to a display data signal D1. The transparent backlight unit 104 is configured at one side of the transparent display panel 102, and the transparent backlight unit 104 emits light and acts as a backlight source to irradiate the transparent display panel 102, such that the transparent display panel 102 displays an image through the distribution of the non-transparent area. In the present embodiment, the light emitted by the transparent backlight unit 104 is toward the transparent display panel 102, which should not be construed as a limitation to the invention. In other embodiments of the invention, the light emitted by the transparent backlight unit 104 may face against the transparent display panel 102, or the transparent backlight unit 104 may emit light simultaneously facing toward and against the transparent display panel 102.

Due to the transparency property, the transparent backlight unit 104 may serve as the backlight source of the transparent display panel 102 without impeding the transparent display device 100 from transparent display. Hence, the conventional light box is not required for providing the backlight source, and thereby the transparent display device 100 may have the reduced thickness.

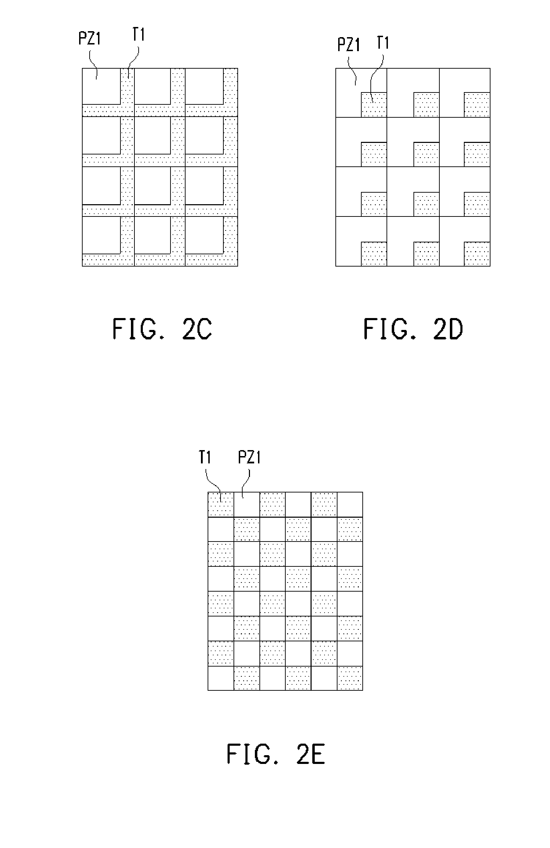

FIG. 2A to FIG. 2E are schematic diagrams illustrating distribution of pixel areas and transparent areas on a transparent display panel according to an embodiment of the invention. The transparent display panel 102 may include a plurality of pixel areas PZ1 and a plurality of transparent areas T1. The transparent areas T1 may be liquid crystal pixels that are not controlled by the display data signal D1, for instance, or the transparent areas T1 do not have any liquid crystal pixels. Namely, the transparent areas T1 are constituted merely by transparent substance, e.g., air or optical clear adhesive (OCA). Besides, a gray scale level of each of the pixel areas PZ1 is adjusted according to the display data signal D1, such that an image is displayed on the transparent display panel 102.

As shown in FIG. 2A to FIG. 2E, the transparent areas T1 are periodically arranged on the transparent display panel 102 and alternately arranged with the pixel areas PZ1. The transparency of the transparent areas T1 is not changed together with the display data signal D1, and therefore the arrangement of the transparent areas T1 on the transparent display panel 102 may enhance the transparency of the transparent display device 100. The more the transparent areas T1, the greater the transparency of the transparent display device 100. Note that the transparency may be determined based on the transmittance or the scattering degree; therefore, the word "transparency" herein may include transmittance (or transmissivity) and haze.

In other embodiments of the invention, the transparency of the transparent areas T1 may be changed. For instance, given that the transparent areas T1 are constituted by liquid crystal pixels, the pixels may receive transparency control signals through data lines (not shown) and further adjust the transparency of the transparent areas T1. By collectively adjust the gray scale levels of all of the transparent areas T1 on the transparent display panel 102, the transparency of the transparent display device 100 as a whole may be adjusted. As such, a user is allowed to determine the transparency of the transparent display device 100 based on the background environment where the transparent display device 100 is located, and the background may be prevented from affecting the display quality of the display image sensed by the user.

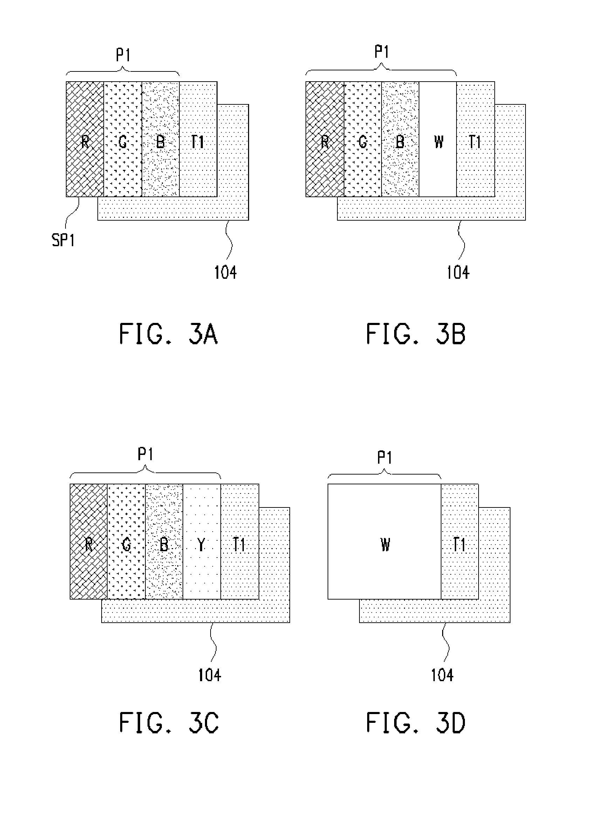

According to the arrangement of sub-pixels schematically shown in FIG. 3A to FIG. 3D, each of the pixel areas PZ1 includes a plurality of pixels PI, and each of the pixels P1 includes at least one sub-pixel SP1. In the present embodiment, three sub-pixels SP1 are shown, and the color of each of the sub-pixels is one of red color, green color, blue color, and yellow color. Specifically, the sub-pixels in different colors may be implemented by a color filter layer. Namely, the transparent display device 100 may further include a color filter layer configured on the transparent display panel 102. The color filter layer has a plurality of pixels P1 corresponding to the pixel areas PZ1, and each of the pixels P1 includes at least one sub-pixel SP1. Each of the sub-pixels SP1 is one of a red color filter layer R, a green color filter layer G, a blue color filter layer B, and a yellow color filter layer Y. From another perspective, the transparent areas T1 do not have any corresponding color filter layer; in other words, the color filter layer corresponding to the transparent areas T1 is transparent.

The pixels P1 respectively shown in FIG. 3A and FIG. 3B both include three color filter layers R, G, and B. Compared to the pixel P1 shown in FIG. 3A, the pixel P1 shown in FIG. 3B further includes a white sub-pixel W which may be formed by not placing any color filter layer on the sub-pixel SP1 or placing a transparent color filter layer on the sub-pixel SP1. The difference between the white sub-pixel W and the transparent area T1 lies in that the gray scale level of the white sub-pixel W is changed according to the display data signal D1, while the gray scale level of the transparent area T1 is changed according to the transparency control signal. In addition, the pixel P1 shown in FIG. 3C includes four color filter layers R, G, B, and Y.

Owing to the gray scale level adjustment of each sub-pixel SP1 as well as the color filter layers in different colors and the backlight source provided by the transparent backlight unit 104, the transparent display device may display a color image. The transparent areas T1 may enhance the transparency of the displayed color image or adjust the transparency of the displayed color image by changing the gray scale levels of the transparent areas T1. Note that the sub-pixels SP1 described in the present embodiment are arranged in a stripe manner, which should not be construed as a limitation to the invention. For instance, the arrangement of sub-pixels SP1 may be in a mosaic shape or in a triangle shape.

In FIG. 3D, the pixel P1 merely includes the white sub-pixel W, and thus the transparent display device 100 having the sub-pixel W shown in FIG. 3D may only display a black-and-white image. Note that the transparent areas T1 are overlapped with the transparent backlight unit 104 in all of the embodiments shown in FIG. 3A to FIG. 3D. That is, the image displayed on the transparent areas T1 is affected by the transparent backlight unit 104. Nonetheless, as described in the embodiments shown in FIG. 2A to FIG. 2E, the transparent areas T1 may be merely constituted by transparent substance, i.e., air or OCA. In other words, the transparent backlight unit 104 is placed behind the red, green, blue, and yellow sub-pixels, while no transparent backlight unit 104 is placed behind and irradiates the transparent areas T1. Thereby, the transparent display device 100 may clearly display images and may still allow a user to see scenery objects behind the transparent display device 100, and the user's vision to the background scene is not blocked by the light emitted from the transparent backlight unit 104.

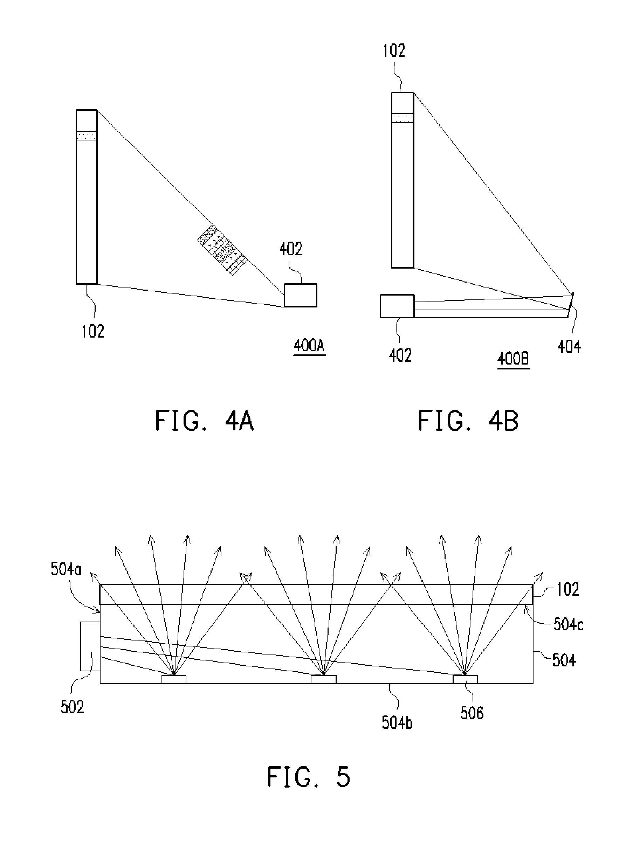

In another embodiment, the transparent backlight unit 104 may be implemented in a different manner, such that the transparent display device 100 may display a color image. FIG. 4A is a schematic diagram illustrating a transparent display device according to another embodiment of the invention. As shown in FIG. 4A, in the present embodiment, the transparent backlight unit 104 of the transparent display device 400A is implemented in form of a projection unit 402. The projection unit 402 may sequentially project light in red, blue, and green through applying a color sequential method, so as to produce full-color composite images in human brains on account of vision persistence of human beings. FIG. 4B is a schematic diagram illustrating a transparent display device according to another embodiment of the invention. As shown in FIG. 4B, in the present embodiment, the transparent display device 400B may further include a reflective unit that reflects projection light of the projection unit 402 and acts as the backlight source. Thereby, the user is also able to observe color images. In addition, through the projection light of the projection unit 402 reflected by the reflective unit 404, the transparent display panel 102 may be irradiated more evenly, and the display quality of the image can be further ameliorated.

According to the previous embodiments, one single pixel area PZ1 corresponds to one single transparent area T1, which should not be construed as a limitation to the invention. In other embodiments, plural pixel areas PZ1 may correspond to one transparent area T1, or one pixel area PZ1 corresponds to plural transparent areas T1, and thereby the transparency control and the display contents may become diverse and profound.

FIG. 5 is a schematic diagram illustrating a transparent display device according to another embodiment of the invention. In the present embodiment, the transparent backlight unit 104 of the transparent display device 500 may be implemented in form of the light source 502 and the LGP 504. The LGP 504 has a light-incident side surface 504a, a first surface 504b, and a second surface 504c opposite to the first surface 504b, and the second surface 504c is located between the transparent display panel 102 and the first surface 504b. The light source 502 is configured adjacent to the light-incident side surface 504a of the LGP 504, and the first surface 504b of the LGP 504 has a plurality of scattering particles 506 thereon. The scattering particles 506 may reflect light emitted from the light source 502 and serve as the backlight source. The area of the display image occupied by the scattering particles 506 is rather insignificant; thus, when a user observes the display image on the transparent display device 500, the user is not able to perceive the scattering particles 506. That is, in the user's eyes, the display image on the transparent display device 500 appears to be a transparent display image.

To sum up, the transparent backlight unit serves as the backlight source of the transparent display panel in an embodiment of the invention, such that the transparent display device may have the reduced thickness. The transparent areas on the transparent display panel may enhance the transparency of the transparent display device. Moreover, through adjustment of the gray scale levels of the transparent areas, the transparency of the transparent display device may be changed, and thereby the readability of images displayed on the transparent display device may be improved.

## Claims

1. A transparent display device (100, 400A, 400B, 500) comprising:
a transparent display panel (102) adjusting distribution of a non-transparent area on the transparent display panel (102) according to a display data signal (D1); and
a transparent backlight unit (104) configured at one side of the transparent display panel (102), the transparent backlight unit (104) emitting light and acting as a backlight source to irradiate the transparent display panel (102), such that the transparent display panel (102) displays an image.

2. The transparent display device (100, 400A, 400B, 500) as recited in claim 1, wherein the transparent display panel (102) comprises:
a plurality of pixel areas (PZ1), a gray scale level of each of the pixel areas (PZ1) being adjusted according to the display data signal (D1), such that an image is displayed on the transparent display panel (102); and
a plurality of transparent areas (T1) determining transparency of the transparent display device (100, 400A, 400B, 500).

3. The transparent display device (100, 400A, 400B, 500) as recited in claim 2, wherein transparency of each of the transparent areas (T1) is adjusted according to a transparency control signal, and the transparency control signal indicates gray scale levels of the transparent areas (T1).

4. The transparent display device (100, 400A, 400B, 500) as recited in claim 2, wherein the transparent areas (T1) are periodically arranged on the transparent display panel (102).

5. The transparent display device (100, 400A, 400B, 500) as recited in claim 2, wherein each of the pixel areas (PZ1) comprises a plurality of pixels (P1), and each of the pixels (P1) comprises at least one sub-pixel (SP1).

6. The transparent display device (100, 400A, 400B, 500) as recited in claim 5, wherein color of each of the at least one sub-pixel (SP1) is one of red color, green color, blue color, and yellow color.

7. The transparent display device (100, 400A, 400B, 500) as recited in claim 2, further comprising:
a color filter layer (R, G, B, Y) configured on the transparent display panel (102), wherein the color filter layer (R, G, B, Y) has a plurality of pixels (P1) corresponding to the pixel areas (PZ1), and each of the pixels (P1) comprises at least one sub-pixel (SP1).

8. The transparent display device (100, 400A, 400B, 500) as recited in claim 7, wherein each of the at least one sub-pixel (SP1) is one of a red color filter layer (R), a green color filter layer (G), a blue color filter layer (B), and a yellow color filter layer (Y).

9. The transparent display device (100) as recited in claim 1, wherein the transparent backlight unit (104) is an organic light-emitting diode display panel.

10. The transparent display device (400A, 400B) as recited in claim 1, wherein the transparent backlight unit (104) is a projection unit (402).

11. The transparent display device (400A, 400B) as recited in claim 10, wherein the projection unit (402) projects color light to the transparent display panel (102) through applying a color sequential method.

12. The transparent display device (400A, 400B) as recited in claim 10, wherein the transparent backlight unit (104) further comprises:
a reflective unit (404) reflecting projection light of the projection unit (402) and acting as the backlight source.

13. The transparent display device (500) as recited in claim 1, wherein the transparent backlight unit (104) comprises:
a light guide plate (504) having a light-incident side surface (504a), a first surface (504b), and a second surface (504c) opposite to the first surface (504b), wherein the second surface (504c) is located between the transparent display panel (102) and the first surface (504b);
a light source (502) configured adjacent to the light-incident side surface (504a) of the light guide plate (504); and
a plurality of scattering particles (506) configured on the first surface (504b), the scattering particles (506) reflecting light emitted from the light source (502) and acting as the backlight source.

14. The transparent display device (500) as recited in claim 7, wherein arrangement of the sub-pixel (SP1)s is in a stripe shape, in a mosaic shape, or in a triangle shape.
